# EUROPEAN PATENT APPLICATION

(11) **EP 2 632 184 A2**
(43) Date of publication of application: **28.08.2013**
(21) Application number: 13156192.0
(22) Date of filing: 21.02.2013
(51) Int. Cl.: H04W 4/12, H04L 12/58

(54) **Apparatus and Method for Providing a Message Service in an Electronic Device**

(30) Priority: 21.02.2012 KR 20120017414
(71) Applicant: Samsung Electronics Co., Ltd, Gyeonggi-do 443-742 (KR)
(72) Inventor: Kwon, Won-Seok, Gyeonggi-do (KR); Kim, Min-Ji, Seoul (KR); Park, Jin, Gyeonggi-do (KR)
(74) Representative: Birchenough, Lewis

(57) **Abstract**

An apparatus and method implement a messenger service in an electronic device. The method operates in a server of a wireless communication system and includes detecting a search word from a message received from at least one electronic device, determining supplementary information dependent on the search word detected from the message received from the at least one electronic device, and transmitting the message and the supplementary information to at least one electronic device providing a supplementary service among the at least one electronic device.

## Description

### BACKGROUND OF THE INVENTION

### 1. Field of the Invention

The present invention relates to an apparatus and method for providing a messenger service in an electronic device.

### 2. Description of the Related Art

Portable electronic devices, having become necessities of modern people due to the easiness of carrying such portable electronic devices, are providing various services such as a voice and video call function, an information input and output function, and data storage.

As the spreading of the portable electronic devices increases as above, the use of a messenger service for message exchange and content exchange between users through a communication network is increasing.

As the use of the messenger service increases, the users of the portable electronic devices using the messenger service require various secondary services as well as transmission of information made or selected by the users.

Accordingly, the electronic device must provide various secondary services for the user's convenience in the messenger service.

### SUMMARY OF THE INVENTION

An aspect of the present invention is to substantially solve at least the above problems and/or disadvantages and to provide at least the advantages below. Accordingly, one aspect of the present invention is to provide an apparatus and method for providing a messenger service in an electronic device.

Another aspect of the present invention is to provide an apparatus and method for providing a messenger service operating with schedule information in an electronic device.

A further aspect of the present invention is to provide an apparatus and method for providing secondary service information related to messenger message content in an electronic device.

Yet another aspect of the present invention is to provide an apparatus and method for controlling a messenger service of an electronic device processed with schedule information of the electronic device in a messenger server.

Still another aspect of the present invention is to provide an apparatus and method for providing secondary service information, related to messenger message content of an electronic device, to the electronic device in a messenger server.

The above aspects are achieved by providing an apparatus and method for providing a messenger service in an electronic device.

According to one aspect of the present invention, a method for providing a messenger service in a server of a wireless communication system is provided. The method includes detecting a search word from a message received from at least one electronic device, determining supplementary information dependent on the search word detected from the message received from the at least one electronic device, and transmitting the message and the supplementary information to at least one electronic device providing a supplementary service among the at least one electronic device.

According to another aspect of the present invention, a method for providing a messenger service in an electronic device is provided. The method includes having access to a messenger server, sending a message to the messenger server, and, if receiving a message and supplementary information from the messenger server, displaying the received message and supplementary information such that the received message and supplementary information are distinguished from each other.

According to a further aspect of the present invention, a server apparatus includes a communication interface for enabling communication between devices and a controller for, if a search word is included in a message received from at least one electronic device through the communication interface, determining supplementary information dependent on the search word, and transmitting the message and the supplementary information to at least one electronic device providing a supplementary service among the at least one electronic device through the communication interface.

According to yet another aspect of the present invention, an electronic device includes a communication unit for communicating, a controller for controlling to have access to a messenger server through the communication unit, send a message to the messenger server and, if receiving a message and supplementary information from the messenger server, display the message and supplementary information received from the messenger server, and a display unit for displaying the received message and supplementary information such that the received message and supplementary information are distinguished from each other.

### BRIEF DESCRIPTION OF THE DRAWINGS

The above and other objects, features and advantages of the present invention will become more apparent from the following detailed description when taken in conjunction with the accompanying drawings in which:
FIG. 1 is a diagram illustrating a construction of a wireless communication system according to an exemplary embodiment of the present invention;
FIG. 2 is a block diagram illustrating a construction of an electronic device according to the exemplary embodiment of the present invention;
FIG. 3 is a block diagram illustrating a construction of a messenger server according to the exemplary embodiment of the present invention;
FIG. 4 is a ladder diagram illustrating a procedure for processing schedule information and a messenger service in the wireless communication system according to a first exemplary embodiment of the present invention;
FIG. 5 is a ladder diagram illustrating a procedure for processing schedule information and the messenger service in the wireless communication system according to a second exemplary embodiment of the present invention;
FIG. 6 is a flowchart illustrating a procedure for processing schedule information and the messenger service in the electronic device according to the exemplary embodiment of the present invention;
FIG. 7 is a flowchart illustrating a procedure for processing schedule information of an electronic server and the messenger service in the messenger server according to the first exemplary embodiment of the present invention;
FIG. 8 is a diagram illustrating a screen configuration for processing schedule information and the messenger service in the electronic device according to the first exemplary embodiment of the present invention;
FIG. 9 is a diagram illustrating a screen configuration for processing schedule information and the messenger service in the electronic device according to the second exemplary embodiment of the present invention;
FIG. 10 is a ladder diagram illustrating a procedure for processing schedule information and the messenger service in the wireless communication system according to a third exemplary embodiment of the present invention;
FIG. 11 is a flowchart illustrating a procedure for processing schedule information of the electronic server and the messenger service in the messenger server according to the second exemplary embodiment of the present invention;
FIG. 12 is a diagram illustrating a screen configuration for processing schedule information and the messenger service in the messenger server according to the third exemplary embodiment of the present invention;
FIG. 13 is a flowchart illustrating a procedure for providing secondary service information about the messenger service in the wireless communication system according to the first exemplary embodiment of the present invention;
FIG. 14 is a flowchart illustrating a procedure for providing the messenger service in the electronic device according to the first exemplary embodiment of the present invention;
FIG. 15 is a flowchart illustrating a procedure for providing secondary service information about the messenger service in the messenger server according to the first exemplary embodiment of the present invention;
FIG. 16 is a diagram illustrating a screen configuration for providing secondary service information about the messenger service in the electronic device according to the first exemplary embodiment of the present invention;
FIG. 17 is a flowchart illustrating a procedure for providing secondary service information about the messenger service in the wireless communication system according to the second exemplary embodiment of the present invention;
FIG. 18 is a flowchart illustrating a procedure for providing the messenger service in the electronic device according to the second exemplary embodiment of the present invention;
FIG. 19 is a flowchart illustrating a procedure for providing secondary service information about the messenger service in the messenger server according to the second exemplary embodiment of the present invention; and
FIG. 20 is a diagram illustrating a screen configuration for providing secondary service information about the messenger service in the electronic device according to the second exemplary embodiment of the present invention.

### DETAILED DESCRIPTION OF THE INVENTION

Exemplary embodiments of the present invention will be described herein below with reference to the accompanying drawings. In the following description, well-known functions or constructions are not described in detail since they may obscure the invention in unnecessary detail. In addition, terms described below, which are defined considering functions in the present invention, can be different depending on user and operator's intention or practice. Therefore, the terms should be defined on the basis of the disclosure throughout this specification.

The present invention may, however, be embodied in many different forms and should not be construed as limited to the exemplary embodiments set forth herein. The principles and features of this invention may be employed in varied and numerous embodiments without departing from the scope of the invention.

The same reference numbers are used throughout the drawings to refer to the same or like parts. Furthermore, although the drawings represent exemplary embodiments of the invention, the drawings are not necessarily to scale and certain features may be exaggerated or omitted in order to more clearly illustrate and explain the present invention.

Among the terms set forth herein, a terminal refers to any kind of device capable of processing data which is transmitted or received to or from any external entity. The terminal may display icons or menus on a screen to which stored data and various executable functions are assigned or mapped. The terminal may include a computer, a notebook, a tablet PC, a mobile device, and the like.

Among the terms set forth herein, a screen refers to a display or other output devices which visually display information to the user, and which optionally are capable of receiving and electronically processing tactile inputs from a user using a stylo, a finger of the user, or other techniques for conveying a user selection from the user to the output devices.

Among the terms set forth herein, an icon refers to a graphical element such as a figure or a symbol displayed on the screen of the device such that a user can easily select a desired function or data. In particular, each icon has a mapping relation with any function being executable in the device or with any data stored in the device and is used for processing functions or selecting data in the device. When a user selects one of the displayed icons, the device identifies a particular function or data associated with the selected icon. Then the device executes the identified function or displays the identified data.

Among the terms set forth herein, data refers to any kind of information processed by the device, including text and/or images received from any external entities, messages transmitted or received, and information created when a specific function is executed by the device.

The present invention relates to an apparatus and method for providing a secondary service for a messenger service in an electronic device.

A technology and exemplary embodiments of the present invention for providing secondary service information about the messenger service in the electronic device according to the present invention are described below. Here, the secondary service information represents supplementary information such as a schedule, geographic surroundings information and the like, which are related to message content transmitted/received through the messenger service.

In the following description, the electronic device includes a mobile communication terminal capable of providing a messenger service, a Portable Digital Assistant (PDA), a laptop computer, a desktop computer, a smart phone, a netbook, a Mobile Internet Device (MID), a Ultra Mobile Personal Computer (UMPC), a tablet PC, a navigator, an MPEG Audio Layer-3 (MP3) player, a smart television (TV) and the like.

In the following description, the electronic device is also called a terminal, and so the terms "electronic device" and "terminal" as used herein are interchangeable.

The following description is made with an example of a terminal which provides an instant messenger service. However, although the terminal provides a messenger service of different messenger methods and communication protocols, the terminal can provide secondary service information identically regardless of the messenger methods and communication protocols.

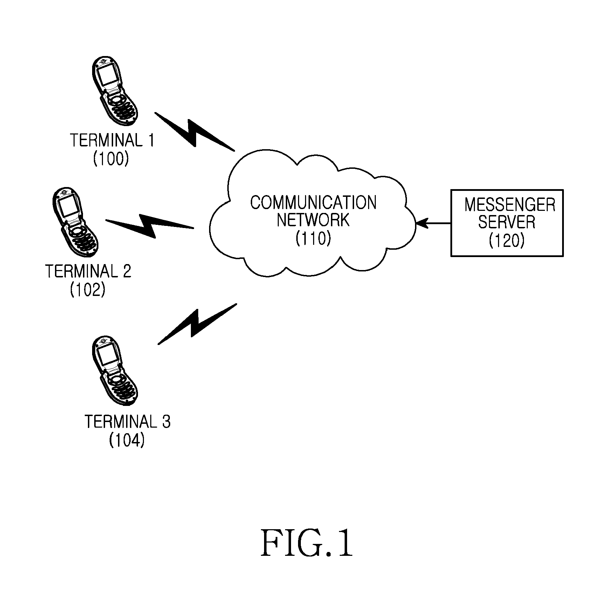

FIG. 1 illustrates a construction of the wireless communication system according to the exemplary embodiment of the present invention.

As illustrated in FIG. 1, the wireless communication system includes terminals 100, 102, and 104, a communication network 110, and a messenger server 120.

The terminals 100, 102, and 104 each have access to the messenger server 120 through the communication network 110 and transmits/receives messages with the other terminals 100, 102, and 104. At this time, at least one terminal among the terminals 100, 102, and 104 provides schedule information to the messenger server 120 to provide the messenger service processed with the schedule information.

The communication network 110 provides a communication service, such as voice communication, data communication and the like, to the terminals 100, 102, and 104 that are located within a service area. Here, the communication network 110 includes any one of a wired communication network and a wireless communication network.

The messenger server 120 controls the messenger service for the terminals 100, 102, and 104 that have access to the messenger server 120 through the communication network 110. For example, if the terminals 100, 102, and 104 have access to the messenger server 120, the messenger server 120 provides a message received from the first terminal 100, labeled terminal 1, to the second terminal 102, labeled terminal 2, and the third terminal 104, labeled terminal 3. At this time, the messenger server 120 provides, together with the message, secondary service information related to a search word included in the message of the terminals 100, 102, and 104, to the second terminal 102 and the third terminal 104. Here, the message includes messenger message content of the terminals 100, 102, and 104 for the messenger service. The search word is a noun or any other known type of word, character, number, symbol, logogram, pictogram, ideogram, etc., with which the secondary service information can match among characters forming the messenger message content. The search word includes location information, time information, a company name, a product name and the like.

As described above, the wireless communication system provides a secondary service to the terminals 100, 102, 104, using the messenger server 120. In the exemplary embodiment, a function of the messenger server 120 providing the secondary service may be provided by at least one terminal among the terminals 100, 102, 104 providing the messenger service.

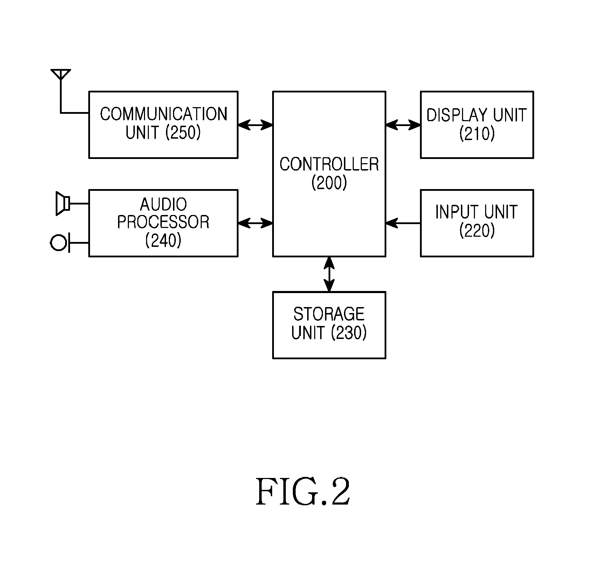

FIG. 2 illustrates a construction of an electronic device according to the exemplary embodiment of the present invention.

As illustrated in FIG. 2, the electronic device, which may be any one of the terminals 100, 102, 104 in FIG. 1, includes a controller 200, a display unit 210, an input unit 220, a storage unit 230, an audio processor 240, and a communication unit 250.

The controller 200 performs the whole operation control of the electronic device.

The controller 200 controls to provide the messenger service. For instance, the controller 200 controls to transmit a message input, through the input unit 220, to the messenger server 120 though the communication unit 250. Also, the controller 200 controls to display a message received from the messenger server 120 through the communication unit 250, on the display unit 210. At this time, the controller 200 controls to display, together with the message, secondary service information received from the messenger server 120, through the communication unit 250, on the display unit 210.

If a service for processing schedule information and the messenger service is set, the controller 200 may control to transmit the schedule information, stored in the storage unit 230, to the messenger server 120 through the communication unit 250.

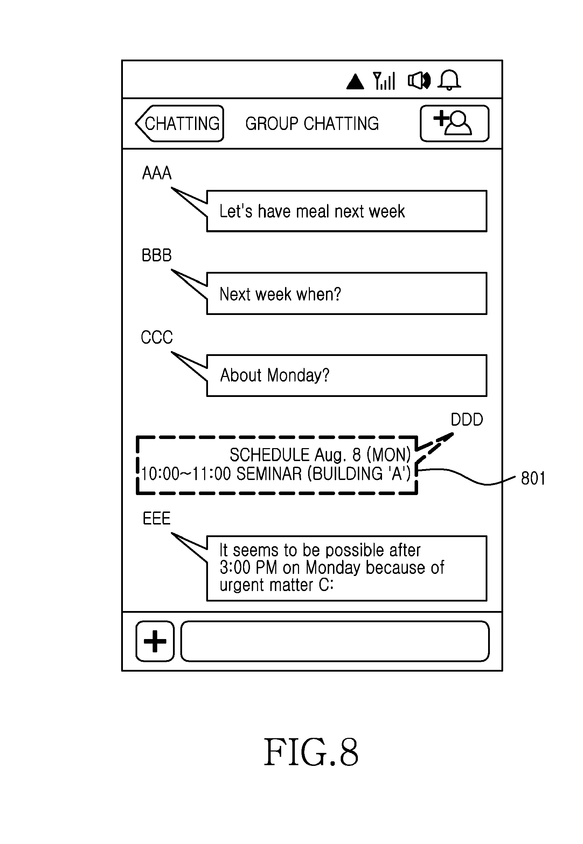

The display unit 210 displays status information of the electronic device, a character input by a user, a moving picture, a still picture and the like according to control by the controller 200. For instance, the display unit 210 displays content of a message input through the input unit 220 and content of a message received from the messenger server 120 through the communication unit 250, in message forms illustrated in FIG. 8, FIG. 9, FIG. 12, FIG. 16, and FIG. 20 herein. At this time, the display unit 210 displays secondary service information 801, 901, 1201, 1601, and 2001, shown in FIG. 8, FIG. 9, FIG. 12, FIG. 16, and FIG. 20, respectively, received from the messenger server 120 through the communication unit 250, together with the contents of the messages.

The input unit 220 provides input data, generated by a user's selection, to the controller 200.

The storage unit 230 can be composed of a program storage unit for storing a program for controlling an operation of the electronic device and a data storage unit for storing data generated during program execution. For example, the storage unit 230 stores schedule information of a user of the electronic device.

The audio processor 240 controls input/output of an audio signal. For example, the audio processor 240 transmits an audio signal, received from the controller 200, externally through a speaker, and provides an audio signal, received from a microphone, to the controller 200.

The communication unit 250 processes a signal transmitted/received through an antenna. For example, the communication unit 250 includes an antenna module, a Radio Frequency (RF) processor, an amplifier, a tuner, an oscillator, a digital signal processor, a COder/DECoder (CODEC) and the like. However, without being limited to these components or modules, the communication unit 250 can include a circuit performing any or all of the functions of the aforementioned components or modules.

As described above, the electronic device includes the display unit 210 and the input unit 220. If the display unit 210 is composed of or includes a touch screen, the display unit 210 may provide an output interface between the electronic device and a user and an input interface therebetween. In this case, the input unit 220 may be constructed including only a control button for control of an image display device, or may be constructed as a keypad apart from the touch screen.

The touch screen may be any known type of touch screen device, such as a capacitive type, a resistive type, etc., which may be operated by a finger or stylus of a user touching and/or within a minimal proximity to the touch screen.

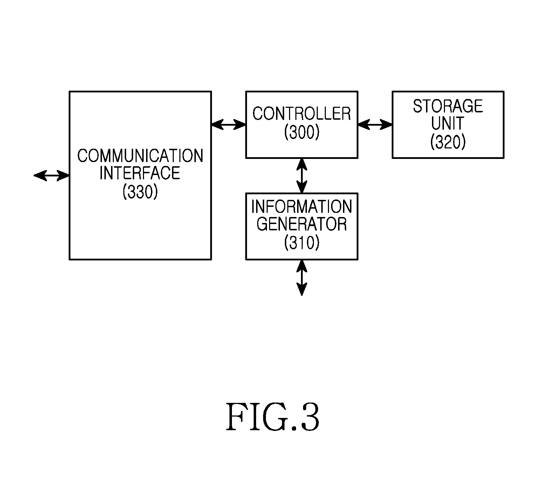

FIG. 3 illustrates a construction of the messenger server according to the exemplary embodiment of the present invention.

As illustrated in FIG. 3, the messenger server includes a controller 300, an information generator 310, a storage unit 320, and a communication interface 330.

The controller 300 controls the messenger server to provide the messenger service for the terminals 100, 102, 104 that have had access to the messenger server through the communication network 110. For example, when the terminals 100, 102, and 104 have access to the messenger server 120 as illustrated in FIG. 1, the controller 300 controls to transmit a message received from the first terminal 100 through the communication interface 330, to the second terminal 102 and the third terminal 104.

Further, the controller 300 identifies whether a search word is included in message content transmitted/received between the terminals 100, 102, 104 that have accessed the messenger service. If the search word is included in the message content, the controller 300 controls the information generator 310 to generate secondary service information about the messenger service. Next, the controller 300 controls to transmit the secondary service information, provided from the information generator 310, to at least one terminal that uses the messenger service, through the communication interface 330.

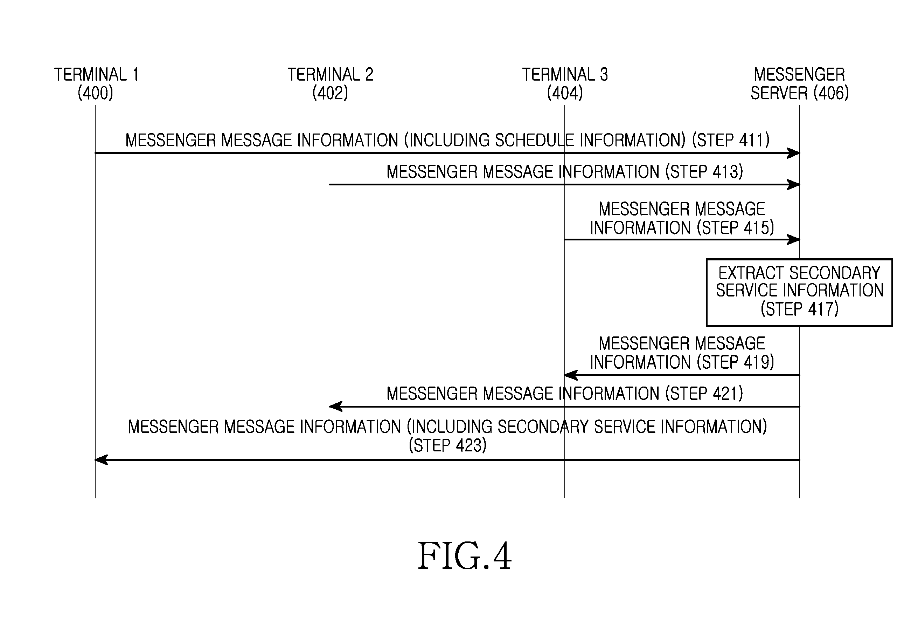

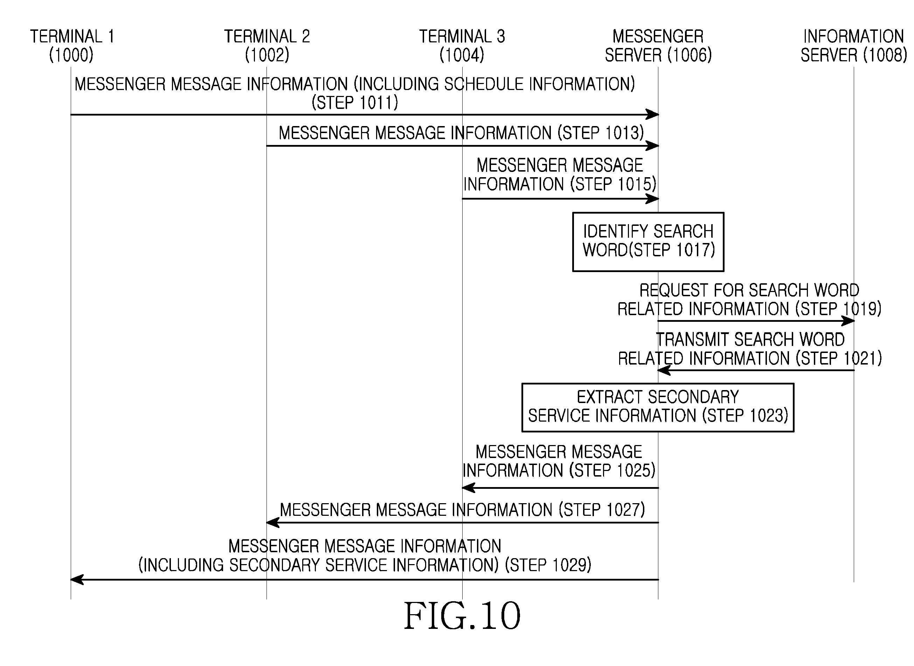

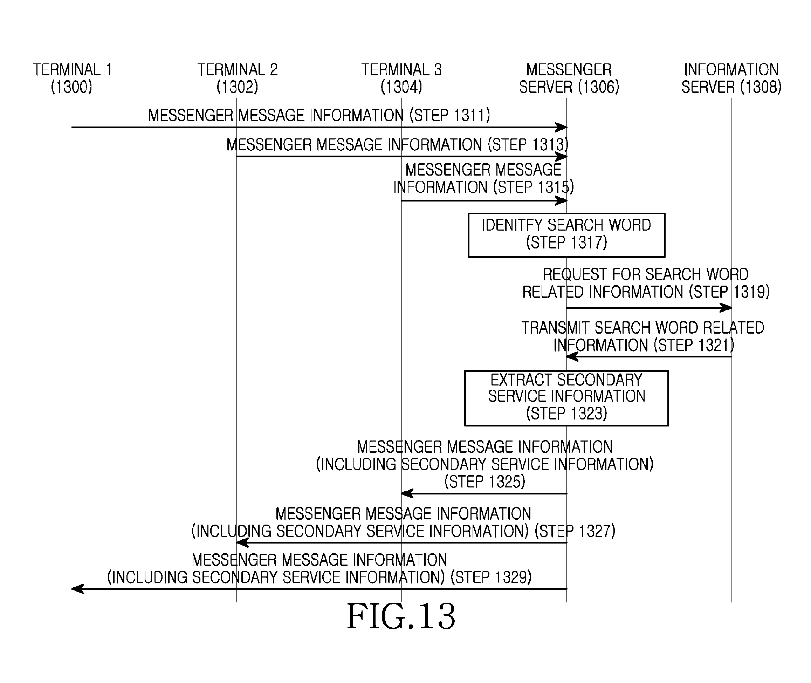

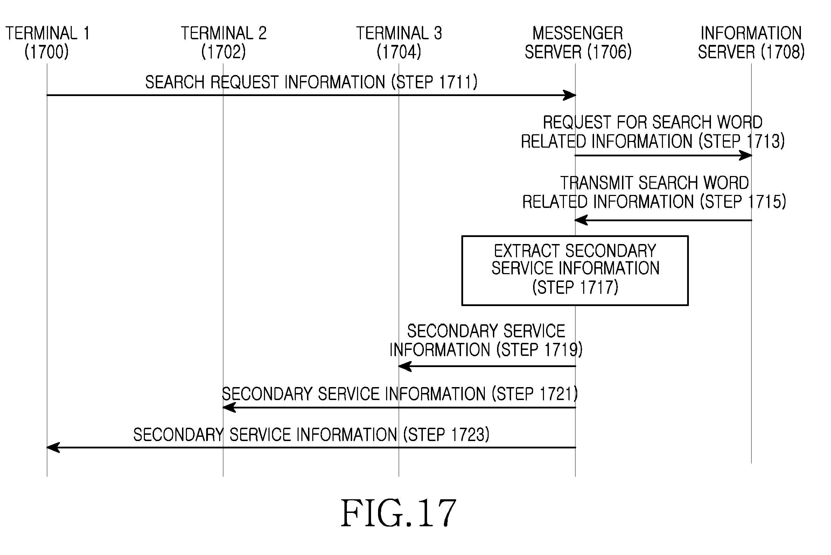

The information generator 310 generates secondary service information about the messenger service according to control by the controller 300. For example, as illustrated in FIG. 3 or FIG. 4, the information generator 310 generates the secondary service information by processing schedule information of a terminal stored in the storage unit 320 and a search word. In another example, as illustrated in FIG. 10, the information generator 310 may generate the secondary service information by processing search word related information received from an information server and schedule information of a terminal stored in the storage unit 320. In a further example, as illustrated in FIG. 13 or FIG. 17, the information generator 310 may generate the secondary service information from search word related information received from the information server.

Referring to FIG. 3, the storage unit 320 can be composed of a program storage unit for storing a program for controlling an operation of the messenger server and a data storage unit for storing data generated during program execution. For example, the storage unit 320 stores schedule information received from a terminal that uses a messenger service and search word information extracted from messenger message content, according to control by the controller 300.

The communication interface 330 transmits/receives a signal with at least one terminal that uses a messenger service, through the communication network 110 in FIG. 1.

FIG. 4 illustrates a procedure for processing schedule information and a messenger service in a wireless communication system according to a first exemplary embodiment of the present invention.

As illustrated in FIG. 4, when terminals 400, 402, and 404 have access to a messenger server 406 for a messenger service, each of the terminals 400, 402, and 404 transmit messenger message contents, input by users, to the messenger server 406 in step 411 to step 415. At this time, when the first terminal 400 provides a secondary service for the messenger service, the first terminal 400 transmits its schedule information to the messenger server 406 in step 411. For example, the first terminal 400 transmits the schedule information to the messenger server 406, together with the messenger message content. In another example, the first terminal 400 may transmit the schedule information to the messenger server 406, apart from the messenger message content. In a further example, the first terminal 400 may transmit only the schedule information to the messenger server 406.

If a search word is extracted among the messenger message contents of the terminals 400, 402, and 404, the messenger server 406 generates secondary service information related to the search word, from the schedule information of the first terminal 400 in step 417. For example, when the terminals 400, 402, and 404 set an appointment of August 08 through the messenger service, the messenger server 406 extracts search words "August 08" and "appointment" among messenger message contents. Next, the messenger server 406 extracts a schedule related to the date "August 08" from the schedule information of the first terminal 400.

After that, the messenger server 406 provides the messenger message contents received from the terminals 400, 402, and 404, to the other terminals 400, 402, and 404 in step 419 to step 423. For example, the messenger server 406 transmits the messenger message contents received from the first terminal 400 and the second terminal 402, to the third terminal 404 in step 419. Also, the messenger server 406 transmits the messenger message contents received from the first terminal 400 and the third terminal 404, to the second terminal 402 in step 421. Also, the messenger server 406 transmits the messenger message contents received from the second terminal 402 and the third terminal 404, to the first terminal 400 in step 423. At this time, the messenger server 406 transmits the secondary service information, generated in step 417, to the first terminal 400. For example, the messenger server 406 transmits the secondary service information to the first terminal 400, together with the messenger message contents. In another example, the messenger server 406 may transmit the secondary service information to the first terminal 400, apart from the messenger message contents. In a further example, the messenger server 406 may transmit only the secondary service information to the first terminal 400, separately.

In the aforementioned exemplary embodiment, among the terminals 400, 402, and 404 using the messenger service, for example, only the first terminal 400 provides a secondary service. Accordingly, the messenger server 406 provides secondary service information only to the first terminal 400.

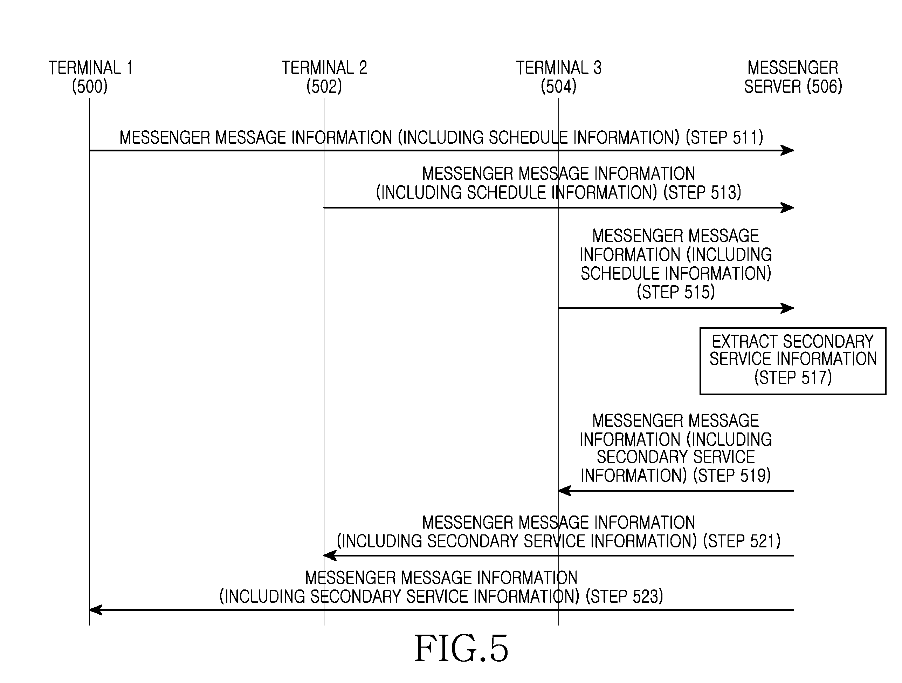

In another exemplary embodiment, if all of the terminals 400, 402, and 404 using the messenger service provide the secondary service, the messenger server 406 may provide the secondary service information to the terminals 400, 402, and 404 as illustrated in FIG. 5 and described below.

FIG. 5 illustrates a procedure for processing schedule information and a messenger service in a wireless communication system according to a second exemplary embodiment of the present invention.

As illustrated in FIG. 5, when terminals 500, 502, and 504 have access to a messenger server 506 for a messenger service, the terminals 500, 502, and 504 transmit messenger message contents, input by users, to the messenger server 506 in step 511 to step 515. At this time, the terminals 500, 502, and 504 transmit their schedule information to the messenger server 506 in step 511 to step 515. For example, the terminals 500, 502, and 504 transmit the schedule information to the messenger server 506, together with the messenger message contents. In another example, the terminals 500, 502, and 504 may transmit the schedule information to the messenger server 506, apart from the messenger message contents. In a further example, the terminals 500, 502, and 504 may transmit only the schedule information to the messenger server 506.

If a search word is extracted among the messenger message contents of the terminals 500, 502, and 504, the messenger server 506 generates secondary service information, related to the search word, from the schedule information of the terminals 500, 502, and 504 in step 517. For example, when the terminals 500, 502, and 504 set an appointment of August 08 through the messenger service, the messenger server 506 extracts search words "August 08" and "appointment" among messenger message contents. Next, the messenger server 506 extracts schedules related to the date "August 08" from the schedule information of the terminals 500, 502, and 504.

After that, the messenger server 506 provides the messenger message contents, received from the terminals 500, 502, and 504, to the other terminals 500, 502, and 504 in step 519 to step 523. For example, the messenger server 506 transmits the messenger message contents received from the first terminal 500 and the second terminal 502, to the third terminal 504 in step 519. Also, the messenger server 506 transmits the messenger message contents received from the first terminal 500 and the third terminal 504, to the second terminal 502 in step 521. Also, the messenger server 506 transmits the messenger message contents received from the second terminal 502 and the third terminal 504, to the first terminal 500 in step 523. At this time, the messenger server 506 transmits the secondary service information, generated in step 517, to the terminals 500, 502, and 504. For example, the messenger server 506 transmits the secondary service information to the terminals 500, 502, and 504, together with the messenger message contents. In another example, the messenger server 506 may transmit the secondary service information to the terminals 500, 502, and 504, apart from the messenger message contents. In a further example, the messenger server 506 may transmit only the secondary service information to the terminals 500, 502, and 504, separately.

The following description is made for an operation method of a terminal providing a secondary service among terminals illustrated in FIG. 4 or FIG. 5.

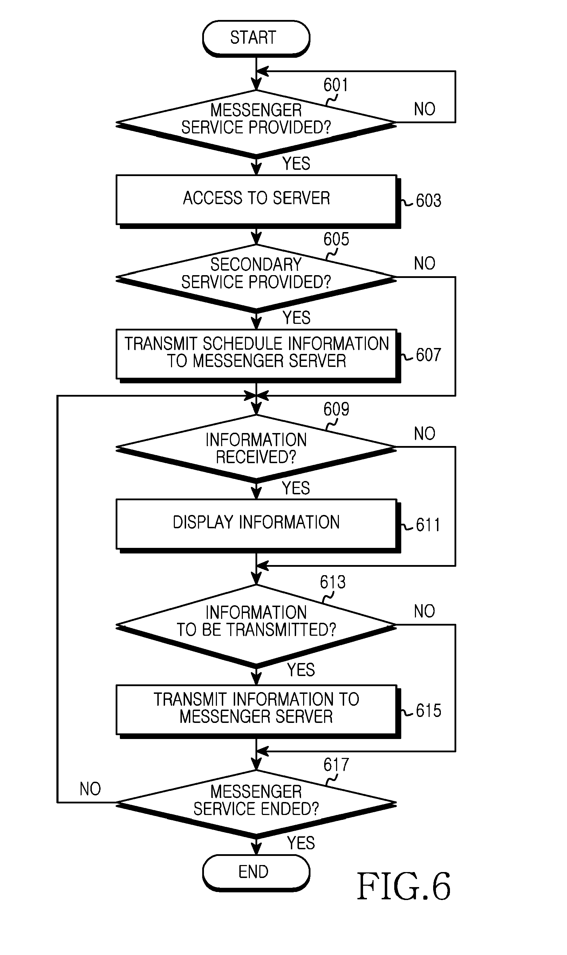

FIG. 6 illustrates a procedure for processing schedule information and the messenger service in the electronic device according to the exemplary embodiment of the present invention. In the following description, for example, the electronic device transmits its schedule information to the messenger server, apart from its messenger message content.

Referring to FIG. 6, in step 601, a terminal identifies whether to provide a messenger service. For example, the terminal identifies if an application for providing the messenger service is selected by a user. If the terminal is not providing the messenger service, the method loops back to step 601 repeatedly to identify whether to provide a messenger service.

If the terminal is providing the messenger service as determined in step 601, the terminal proceeds to step 603 and has access to a messenger server through a communication network to provide the messenger service to the user.

After that, the terminal proceeds to step 605 and identifies whether to provide a secondary service for the messenger service to the user. For example, the terminal identifies if a secondary service provision menu for the messenger service has been set. Here, the secondary service refers to a service of receiving secondary service information related to messenger message content, together with the messenger message content, when the messenger service is used.

If the terminal is not providing the secondary service in step 605, the terminal jumps to step 609 and identifies if information is received from the messenger server. Here, the information received from the messenger server includes messenger message content.

Referring back to step 605, if the terminal is providing the secondary service in step 605, the terminal proceeds to step 607 and transmits its schedule information to the messenger server.

Next, the terminal proceeds to step 609 and identifies if information is received from the messenger server. Here, the information received from the messenger server includes at least one of messenger message content and secondary service information related to the messenger message content.

If the terminal is not receiving the information from the messenger server in step 609, the terminal jumps to step 613 and identifies if information to be transmitted to the messenger server exists. For instance, the terminal identifies if an input of messenger message content from the user is sensed.

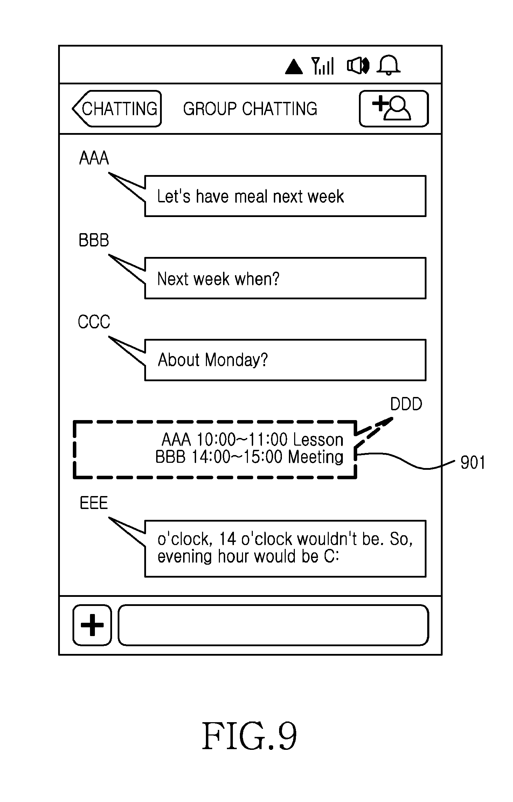

Referring back to step 609, if the terminal is receiving the information from the messenger server in step 609, the terminal proceeds to step 611 and displays the information received from the messenger server such that the user can identify the information received from the messenger server. For instance, as illustrated in FIG. 8, the first terminal 400 illustrated in FIG. 4 displays messenger message contents of the other terminals 402 and 404, received from the messenger server, on the display unit 210. If the first terminal 400 receives secondary service information 801 including schedule information of the first terminal 400 from the messenger server, the first terminal 400 displays the received secondary service information 801 on the display unit 210, together with the messenger message contents. At this time, the first terminal 400 can display the secondary service information 801 identically with a message that the terminal 400 itself has sent to the messenger server. In another example, as illustrated in FIG. 9, the first terminal 500 illustrated in FIG. 5 displays messenger message contents of the other terminals 502 and 504 received from the messenger server on the display unit 210. If the first terminal 500 receives secondary service information 901 including schedule information of at least one terminal among the terminals 500, 502, and 504 from the messenger server, the first terminal 500 displays the received secondary service information 901 on the display unit 210, together with the messenger message contents. At this time, the first terminal 500 can display the secondary service information 901 identically with a message that the first terminal 500 itself has sent to the messenger server.

Referring back to FIG. 6, the terminal proceeds to step 613 and identifies if information to be transmitted to the messenger server exists. For example, the terminal identifies if an input of messenger message content from the user is sensed.

If it is identified in step 613 that the information to be transmitted to the messenger server does not exist, the terminal jumps to step 617 and identifies if the messenger service is ended. For example, the terminal identifies if the driving of the application for providing the messenger service has ended due to control by the user.

Referring back to step 613, if it is identified in step 613 that the information to be transmitted to the messenger server exists, the terminal proceeds to step 615 and transmits the messenger message content, input by the user, to the messenger server. At this time, the terminal displays the messenger message content, input by the user, on the display unit such that the input messenger message content is distinguished from messenger message content provided from a user of other terminal.

Next, the terminal proceeds to step 617 and identifies if the messenger service has ended. For example, the terminal identifies if the driving of the application for providing the messenger service has ended due to the control by the user.

If it is identified in step 617 that the messenger service is not ended, the terminal returns to step 609 and identifies if information is received from the messenger server.

However, if it is identified in step 617 that the messenger service is ended, the terminal terminates the method of the present invention.

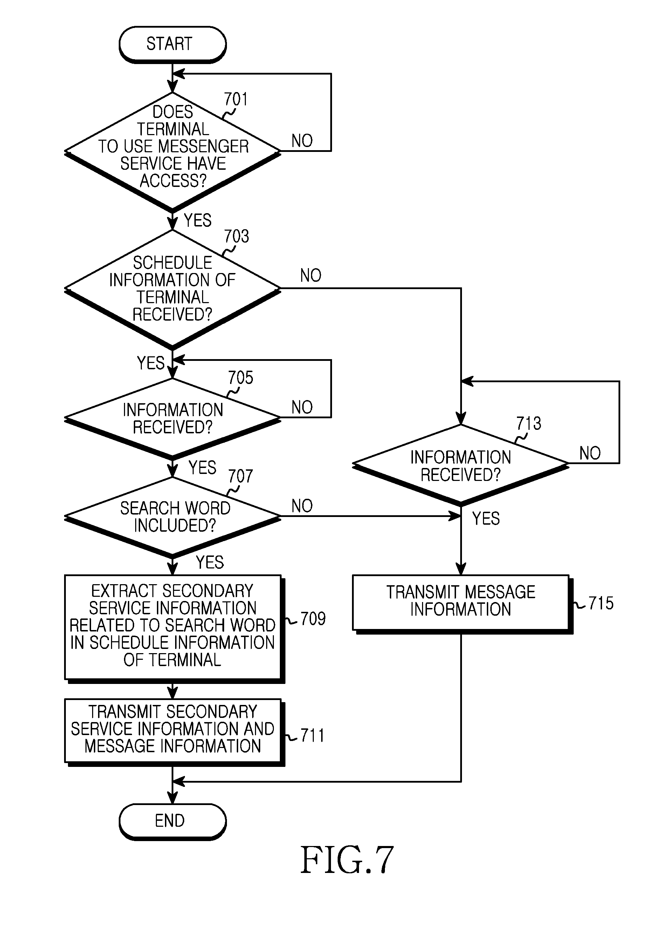

As described above, a terminal using a messenger service displays secondary service information received from the messenger server, together with messenger message content. At this time, the messenger server generates and transmits the secondary service information as illustrated in FIG. 7 and described below.

FIG. 7 illustrates a procedure for processing schedule information of an electronic server and a messenger service in the messenger server according to the exemplary embodiment of the present invention. The following description is made with an example of a terminal providing a secondary service which transmits messenger message content and schedule information, separately.

Referring to FIG. 7, in step 701, the messenger server identifies if at least one terminal set to use a messenger service gains access to the messenger server. If it is not identified in step 701 that the at least one terminal set to use the messenger service gains access to the messenger server, the method loops back to step 701 repeatedly to identify if the at least one terminal is set to use the messenger service to gain access to the messenger server.

However, if it is identified in step 701 that the at least one terminal set to use the messenger service gains access to the messenger server, the messenger server proceeds to step 703 and identifies if schedule information of a terminal providing a secondary service is received.

If it is identified in step 703 that the schedule information of the terminal providing the secondary service is not received, the messenger server proceeds to step 713 and identifies if information for the messenger service is received from the accessed terminal. Here, the information for the messenger service includes messenger message content and information of a called terminal to receive the messenger message content.

If it is identified in step 713 that the information for the messenger service is received from the accessed terminal, the messenger server proceeds to step 715 and transmits the received messenger message content to the called terminal for the messenger service. For example, the messenger server identifies the information of the called terminal to receive the messenger message content, in the information for the messenger service received from the accessed terminal. Next, the messenger server transmits the messenger message content to the called terminal. After step 715, the method ends.

However, if it is not identified in step 713 that the information for the messenger service is received from the accessed terminal, the method loops back to step 713 repeatedly to identify that the information for the messenger service is received from the accessed terminal.

Referring back to step 703, if it is identified in step 703 that the schedule information of the terminal providing the secondary service is received, the messenger server proceeds to step 705 and identifies if information for the messenger service is received from the accessed terminal. If it is not identified in step 705 that the information for the messenger service is received from the accessed terminal, the method loops back to step 705 repeatedly to identify that the information for the messenger service is received from the accessed terminal.

However, if it is identified in step 705 that the information for the messenger service is received from the accessed terminal, the messenger server proceeds to step 707 and identifies if a search word for the secondary service is included in the messenger message content received from the accessed terminal.

If it is identified in step 707 that the search word for the secondary service is not included in the messenger message content received from the accessed terminal, the messenger server proceeds to step 715 and transmits the messenger message content, received from the accessed terminal, to the called terminal for the messenger service. For example, the messenger server identifies the information of the called terminal to receive the messenger message content, in the information for the messenger service received from the accessed terminal. Next, the messenger server transmits the messenger message content to the called terminal.

Referring back to step 707, if it is identified in step 707 that the search word for the secondary service is included in the messenger message content received from the accessed terminal, the messenger server proceeds to step 709 and generates secondary service information related to the search word, from the schedule information of the terminal providing the secondary service. For example, when the first terminal 400 providing the secondary service and the terminals 402 and 404 not providing the secondary service set an appointment of August 08 through the messenger service as illustrated in FIG. 4, the messenger server 406 extracts search words "August 08" and "appointment" among messenger message content. Next, the messenger server 406 extracts a schedule related to the date "August 08" from schedule information received from the first terminal 400, thus generating secondary service information for the first terminal 400.

After step 709, the messenger server proceeds to step 711 and transmits the generated secondary service information and the messenger message content received from the accessed terminal, to the terminals for the messenger service. For instance, the messenger server identifies the information of the called terminal to receive the messenger message content, in the information for the messenger service received from the terminal having had access to itself. Next, the messenger server transmits the messenger message content to the called terminal. At this time, the messenger server additionally transmits the secondary service information to the terminal providing the secondary service.

After step 711, the messenger server terminates the method of the present invention.

In the aforementioned exemplary embodiment, the messenger server generates secondary service information using schedule information of a terminal providing a secondary service.

In another exemplary embodiment, the messenger server may generate the secondary service information using the schedule information of the terminal providing the secondary service and surrounding geographic area information as illustrated in FIG. 10 and described below.

FIG. 10 illustrates a procedure for processing schedule information and a messenger service in a wireless communication system according to a third exemplary embodiment of the present invention.

As illustrated in FIG. 10, when terminals 1000, 1002, and 1004 have access to a messenger server 1006 for a messenger service, the terminals 1000, 1002, and 1004 transmit messenger message contents input by users, to the messenger server 1006 in step 1011 to step 1015. At this time, when the first terminal 1000 provides a secondary service for the messenger service, the first terminal 1000 transmits its schedule information to the messenger server 1006 in step 1011.

If a search word is extracted among the messenger message contents of the terminals 1000, 1002, and 1004 in step 1017, the messenger server 1006 sends a request for information, related to the search word, to an information server 1008 in step 1019. For example, when the terminals 1000, 1002, and 1004 set an appointment for viewing a movie in Gangnam this afternoon through the messenger service, the messenger server 1006 extracts search words "this", "afternoon", "Gangnam" and "movie" among messenger message contents. Next, the messenger server 1006 transmits extracted search word information to the information server 1008.

The information server 1008 extracts the information related to the search word received from the messenger server 1006, and transmits the extracted search word related information to the messenger server 1006 in step 1021. For example, when the information server 1008 receives the search words "this", "afternoon", "Gangnam", and "movie" from the messenger server 1006, the information server 1008 extracts movie times of theaters located in Gangnam this afternoon on the day of the search, depending on the search words received from the messenger server 1006, and transmits the extracted movie times to the messenger server 1006.

The messenger server 1006 generates secondary service information using the search word related information received from the information server 1008 and the schedule information of the first terminal 1000 in step 1023. For example, if a user of the first terminal 1000 has no schedule from 3 o'clock this afternoon, the messenger server 1006 extracts theater and movie information of a time zone at which the user of the first terminal 1000 can watch a movie, from information of movie times of theaters located in Gangnam this afternoon received from the information server 1008, and generates secondary service information for the first terminal 1000.

After that, the messenger server 1006 provides the messenger message contents, received from the terminals 1000, 1002, and 1004, to the other terminals 1000, 1002, and 1004 in step 1025 to step 1029. For example, the messenger server 1006 transmits the messenger message contents, received from the first terminal 1000 and the second terminal 1002, to the third terminal 1004 in step 1025. Also, the messenger server 1006 transmits the messenger message contents received from the first terminal 1000 and the third terminal 1004, to the second terminal 1002 in step 1027. Also, the messenger server 1006 transmits the messenger message contents received from the second terminal 1002 and the third terminal 1004, to the first terminal 1000 in step 1029. At this time, the messenger server 1006 transmits the secondary service information, generated in step 1023, to the first terminal 1000.

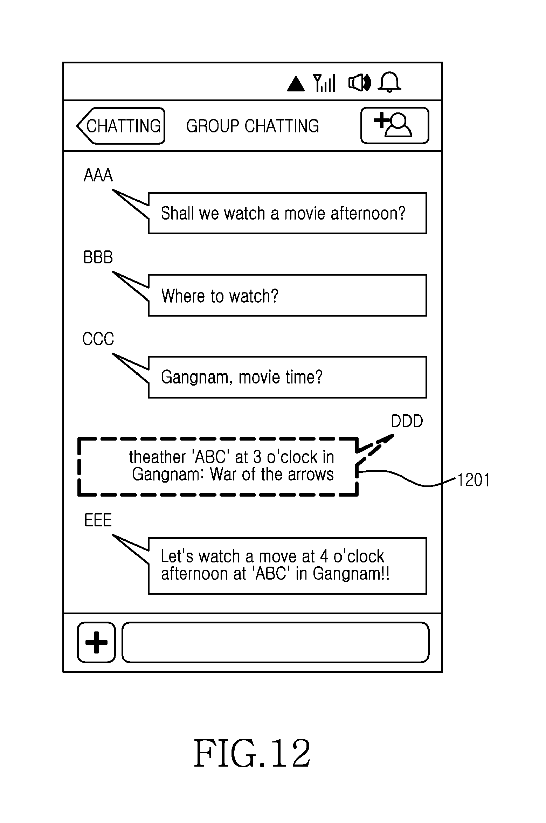

As illustrated in FIG. 12, the first terminal 1000 displays the messenger message contents received from the users of the other terminals 1002 and 1004 on the display unit 210. If the first terminal 1000 receives secondary service information 1201 from the messenger server 1006, the first terminal 1000 displays the received secondary service information 1201 on the display unit 210, together with the messenger message contents. At this time, the first terminal displays the secondary service information identically with the messenger message content that itself has transmitted to the messenger server 1006.

In the aforementioned exemplary embodiment, the messenger server 1006 transmits only search word information to the information server 1008, making a request for search word related information to the information server 1008.

In another exemplary embodiment, the messenger server 1006 may extract schedule information of a terminal related to a search word and send a request for secondary service information to the information server 1008. For instance, if the terminals 1000, 1002, and 1004 set an appointment for viewing a movie in Gangnam this afternoon through a messenger service, the messenger server 1006 extracts search words "this", "afternoon", "Gangnam", and "movie" among messenger message content and then, identifies a time zone, at which a user of the first terminal 1000 can watch a movie this afternoon, in schedule information of the first terminal 1000. Next, the messenger server 1006 sends a request for movie times of theaters located in Gangnam, among the time zones, at which the user of the first terminal 1000 can watch the movie, to the information server 1008.

In the aforementioned exemplary embodiment, the messenger server 1006 and the information server 1008 are constructed separately from each other. In another exemplary embodiment, the messenger server 1006 and the information server 1008 may be constructed as one server.

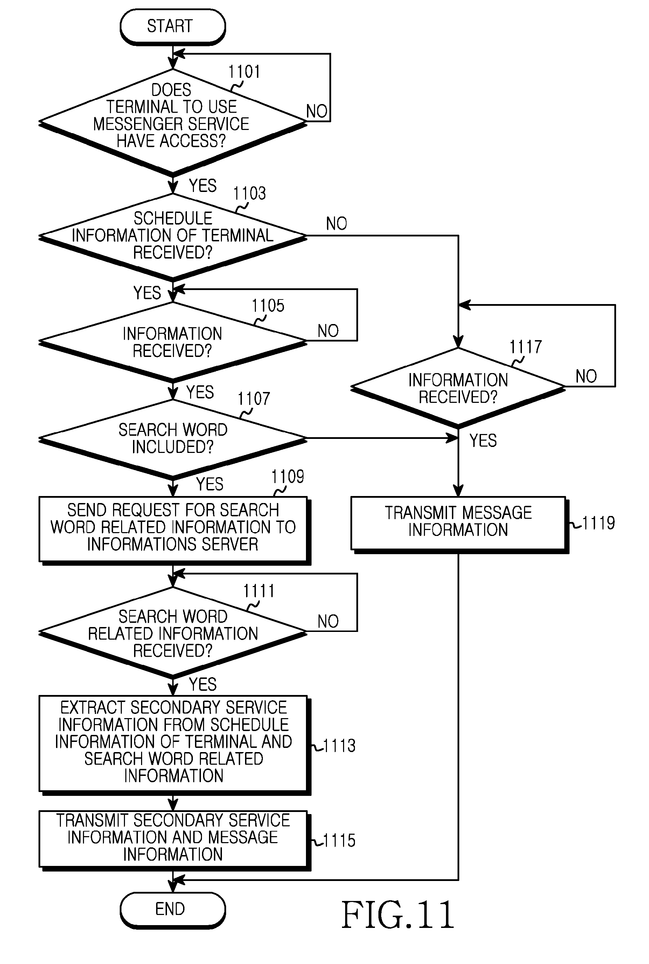

As described above, the messenger server generates secondary service information using schedule information of the terminal providing the secondary service and surrounding geographic area information. At this time, the terminal providing the secondary service operates as illustrated in FIG. 6, and the messenger server generates and transmits the secondary service information as illustrated in FIG. 11 and described below.

FIG. 11 illustrates a procedure for processing schedule information of the electronic server and the messenger service in the messenger server according to the second exemplary embodiment of the present invention. The following description is made with an example of a terminal which transmits messenger message content and schedule information, separately.

Referring to FIG. 11, in step 1101, the messenger server identifies if at least one terminal to use a messenger service gains access to the messenger server. If the message server does not identify if at least one terminal to use a messenger service gains access to the messenger server, the method loops back to step 1101 repeatedly to identify if at least one terminal to use a messenger service gains access to the messenger server.

However, if it is identified in step 1101 that the at least one terminal to use the messenger service gains access to the messenger server, the messenger server proceeds to step 1103 and identifies if schedule information of a terminal providing a secondary service is received.

If it is identified in step 1103 that the schedule information of the terminal providing the secondary service is not received, the messenger server proceeds to step 1117 and identifies if information for the messenger service is received from the accessed terminal. Here, the information for the messenger service includes messenger message content and information of a called terminal to receive the messenger message content. If it is not identified in step 1117 that the information for the messenger service is received from the accessed terminal, the method loops back to step 1117 to identify that the information for the messenger service is received from the accessed terminal.

However, if it is identified in step 1117 that the information for the messenger service is received from the accessed terminal, the messenger server proceeds to step 1119 and transmits the received messenger message content to the called terminal for the messenger service. For example, the messenger server identifies the information of the called terminal to receive the messenger message content, in the information for the messenger service received from the accessed terminal. Next, the messenger server transmits the messenger message content to the called terminal. After step 1119, the method of the present invention ends.

Referring back to step 1103, if it is identified in step 1103 that the schedule information of the terminal providing the secondary service is received, the messenger server proceeds to step 1105 and identifies if information for the messenger service is received from the accessed terminal. If it is not identified in step 1105 that the information for the messenger service is received from the accessed terminal, the method loops back to step 1105 repeatedly to identify that the information for the messenger service is received from the accessed terminal.

However, if it is identified in step 1105 that the information for the messenger service is received from the accessed terminal, the messenger server proceeds to step 1107 and identifies if a search word for the secondary service is included in the messenger message content received from the accessed terminal.

If it is identified in step 1107 that the search word for the secondary service is not included in the messenger message content received from the accessed terminal, the messenger server proceeds to step 1119 and transmits the messenger message content, received from the accessed terminal, to the called terminal for the messenger service. For example, the messenger server identifies the information of the called terminal to receive the messenger message content, in the information for the messenger service received from the accessed terminal. Next, the messenger server transmits the messenger message content to the called terminal.

Referring back to step 1107, if it is identified in step 1107 that the search word for the secondary service is included in the messenger message content received from the accessed terminal, the messenger server proceeds to step 1109 and sends a request for information, related to the search word for the secondary service, to an information server. For example, when the terminals 1000, 1002, and 1004 illustrated in FIG. 10 set an appointment for viewing a movie in Gangnam this afternoon through the messenger service, the messenger server 1006 extracts search words "this", "afternoon", "Gangnam", and "movie" among messenger message content. Next, the messenger server 1006 transmits extracted search word information to the information server 1008.

After step 1109, the messenger server proceeds to step 1111 and identifies if the search word related information is received from the information server. For example, when sending a request for information about the search words "this", "afternoon", "Gangnam", and "movie" to the information server, the messenger server identifies if information about movie times of theaters located in Gangnam this afternoon is received from the information server. If it is not identified in step 1111 that the search word related information is received from the information server, the method loops back to step 1111 repeatedly to identify that the search word related information is received from the information server.

However, if it is identified in step 1111 that the search word related information is received from the information server, the messenger server proceeds to step 1113 and generates secondary service information using the search word related information received from the information server and the schedule information of the terminal providing the secondary service. For example, if a user of the first terminal 1000, providing the secondary service illustrated in FIG. 10, has no schedule from 3 o'clock this afternoon, the messenger server 1006 extracts theater and movie information of a time zone at which the user of the first terminal 1000 can watch a movie, from information of movie times of theaters located in Gangnam this afternoon received from the information server 1008, and generates the secondary service information for the first terminal 1000.

After step 1113, the messenger server proceeds to step 1115 and transmits the generated secondary service information and the messenger message content received from the accessed terminal, to the terminals for the messenger service. For instance, the messenger server identifies the information of the called terminal to receive the messenger message content, in the information for the messenger service received from the terminal having had access to itself. Next, the messenger server transmits the messenger message content to the called terminal. At this time, the messenger server additionally transmits the secondary service information to the terminal providing the secondary service.

After step 1115, the messenger server terminates the method of the present invention.

In the aforementioned exemplary embodiment, the messenger server generates secondary service information using schedule information of a terminal providing a secondary service and surrounding geographic area information.

In another exemplary embodiment, the messenger server may generate the secondary service information using only the surrounding geographic area information as illustrated in FIG. 13 and described below.

FIG. 13 illustrates a procedure for providing secondary service information about a messenger service in a wireless communication system according to the first exemplary embodiment of the present invention.

As illustrated in FIG. 13, when terminals 1300, 1302, and 1304 have access to a messenger server 1306 for a messenger service, the terminals 1300, 1302, and 1304 transmit messenger message contents input by users, to the messenger server 1306 in step 1311 to step 1315.

If a search word is extracted among the messenger message contents of the terminals 1300, 1302, and 1304 in step 1317, the messenger server 1306 sends a request for information, related to the search word, to an information server 1308 in step 1319. For example, when the terminals 1300, 1302, and 1304 determine a place to have red-bean sherbet, the messenger server 1306 extracts search words "red-bean sherbet" and "place" among messenger message contents. Next, the messenger server 1306 transmits extracted search word information to the information server 1308.

The information server 1308 extracts the information related to the search word received from the messenger server 1306 and transmits the extracted search word related information to the messenger server 1306 in step 1321. For example, the information server 1308 extracts a place selling red-bean sherbet and discount information of red-bean sherbet depending on the search words received from the messenger server 1306 and transmits the extracted selling place and discount information to the messenger server 1306.

The messenger server 1306 generates secondary service information to be transmitted to the terminals 1300, 1302, and 1304 that use a secondary service, using the search word related information received from the information server 1308 in step 1323. For example, the messenger server 1306 extracts the secondary service information from the search word related information received from the information server 1308 using location information of the terminals 1300, 1302, and 1304 that use the secondary service or an appointment place thereof.

After that, the messenger server 1306 provides the messenger message contents, received from the terminals 1300, 1302, and 1304, to the other terminals 1300, 1302, and 1304 in step 1325 to step 1329. For example, the messenger server 1306 transmits the messenger message contents, received from the first terminal 1300 and the second terminal 1302, to the third terminal 1304 in step 1325. Also, the messenger server 1306 transmits the messenger message contents, received from the first terminal 1300 and the third terminal 1304, to the second terminal 1302 in step 1327. Also, the messenger server 1306 transmits the messenger message contents, received from the second terminal 1302 and the third terminal 1304, to the first terminal 1300 in step 1329. At this time, the messenger server 1306 transmits the secondary service information, extracted in step 1323, to the terminals 1300, 1302, and 1304 providing the secondary service, together with the messenger message contents.

In the aforementioned exemplary embodiment, the messenger server 1306 extracts secondary service information from search word related information received from the information server 1308, and transmits the secondary service information to the terminals 1300, 1302, and 1304 providing the secondary service.

In another exemplary embodiment, the messenger server 1306 may recognize the search word related information received from the information server 1308, as the secondary service information, and transmit the search word related information to the terminals 1300, 1302, and 1304 providing the secondary service.

In the aforementioned exemplary embodiment, the messenger server 1306 and the information server 1308 are constructed separately from each other. In another exemplary embodiment, the messenger server 1306 and the information server 1308 may be constructed as one server.

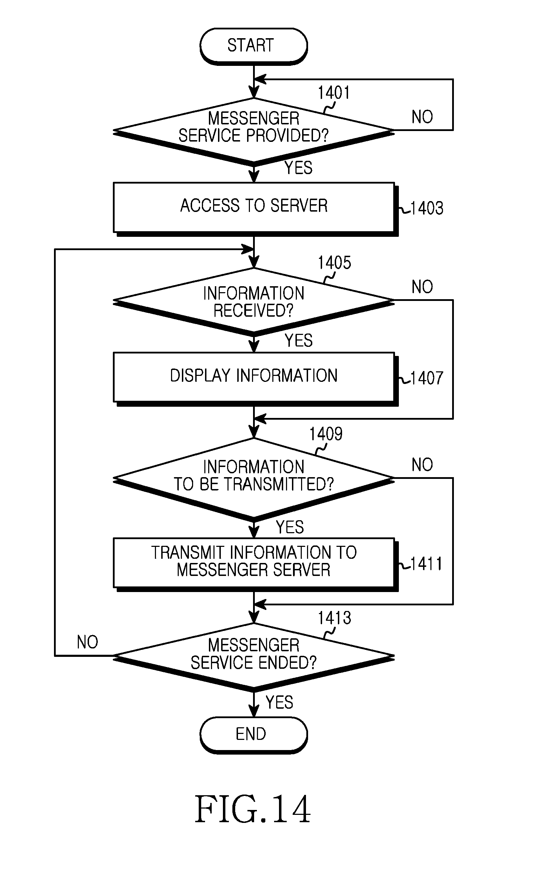

As described above, a messenger server detects a search word from messenger message content of terminals that use a messenger service, and extracts secondary service information for the terminals. At this time, a terminal providing a secondary service operates as illustrated in FIG. 14 and described below.

FIG. 14 illustrates a procedure for providing a messenger service in an electronic device according to a first exemplary embodiment of the present invention.

Referring to FIG. 14, in step 1401, a terminal identifies whether to provide a messenger service. For example, the terminal identifies if an application for providing the messenger service is selected by a user. If the terminal does not identify whether to provide a messenger service, the method loops back to step 1401 repeatedly to identify whether to provide a messenger service.

If the terminal is providing the messenger service in step 1401, the terminal proceeds to step 1403 and has access to a messenger server through a communication network to provide the messenger service to the user.

Next, the terminal proceeds to step 1405 and identifies if information is received from the messenger server. Here, the information received from the messenger server includes at least one of messenger message content and secondary service information related to the messenger message content.

If the terminal is not receiving the information from the messenger server in step 1405, the terminal jumps to step 1409 and identifies if information to be transmitted to the messenger server exists. For example, the terminal identifies if the user has made messenger message content for transmitting to a user of another terminal.

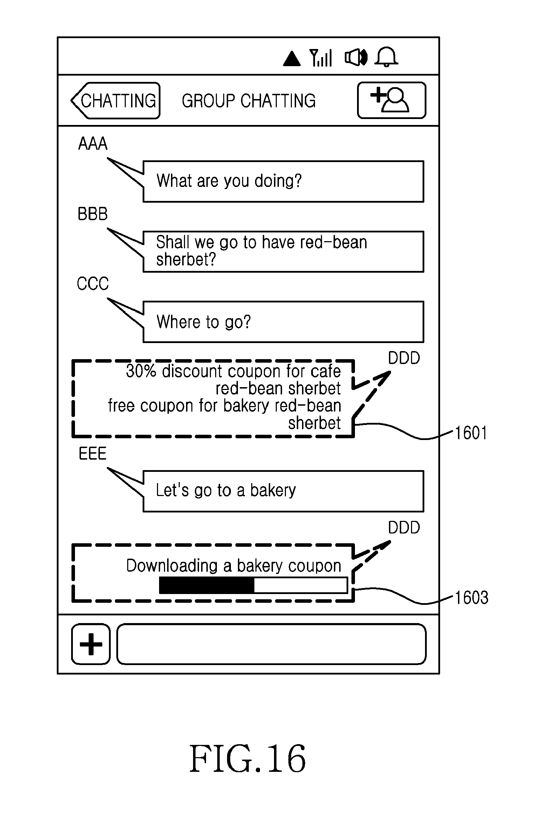

However, in step 1405, if the terminal is receiving the information from the messenger server in step 1405, the terminal proceeds to step 1407 and displays the information received from the messenger server such that the user can identify the information received from the messenger server. For example, as illustrated in FIG. 16, the first terminal 1300 illustrated in FIG. 13 displays messenger message contents of the other terminals 1302 and 1304 received from the messenger server, on the display unit 210. If the first terminal 1300 receives secondary service information 1601 from the messenger server 1306, the first terminal 1300 displays the received secondary service information 1601 on the display unit 210, together with the messenger message contents of the other terminals 1302 and 1304. At this time, the first terminal 1300 can display the secondary service information 1601 identically with a message that the first terminal 1300 itself has sent to the messenger server.

Next, after step 1407, the terminal proceeds to step 1409 and identifies if the information to be transmitted to the messenger server exists. For example, the terminal identifies if the user has made messenger message content for transmitting to a user of another terminal.

If the terminal has identified in step 1409 that the information to be transmitted to the messenger server does not exist, the terminal jumps to step 1413 and identifies if the messenger service is ended. For example, the terminal identifies if the driving of the application for providing the messenger service is ended due to control by the user.

However, if it is identified in step 1409 that the information to be transmitted to the messenger server exists, the terminal proceeds to step 1411 and transmits the messenger message content input by the user, to the messenger server. At this time, the terminal displays the messenger message content input by the user on the display unit such that the input messenger message content is distinguished from messenger message content provided from a user of another terminal.

Next, the terminal proceeds to step 1413 and identifies if the messenger service is ended. For example, the terminal identifies if the driving of the application for providing the messenger service is ended due to the control by the user.

If it is identified in step 1413 that the messenger service is not ended, the terminal returns to step 1405 and identifies if information is received from the messenger server.

However, if it is identified in step 1413 that the messenger service is ended, the terminal terminates the method of the present invention.

In the aforementioned exemplary embodiment, the terminal displays secondary service information received from the messenger server on the display unit 210, together with messenger message contents. If the secondary service information is included in messenger message content additionally received from the messenger server, the terminal may send a request for supplementary information about the secondary service information to the messenger server, and receive the supplementary information about the secondary service information from the messenger server. For example, if the terminal receives red-bean sherbet information 1601 of a cafe and a bakery, as secondary service information, from the messenger server, the terminal displays the received secondary service information 1601 on the display unit 210 as illustrated in FIG. 16. Next, if "Let's go to a bakery" is identified in messenger message contents of terminals that use a messenger service, the terminal may send a request for a red-bean sherbet coupon of the bakery to the messenger server, and download the red-bean sherbet coupon from the messenger server 1603.

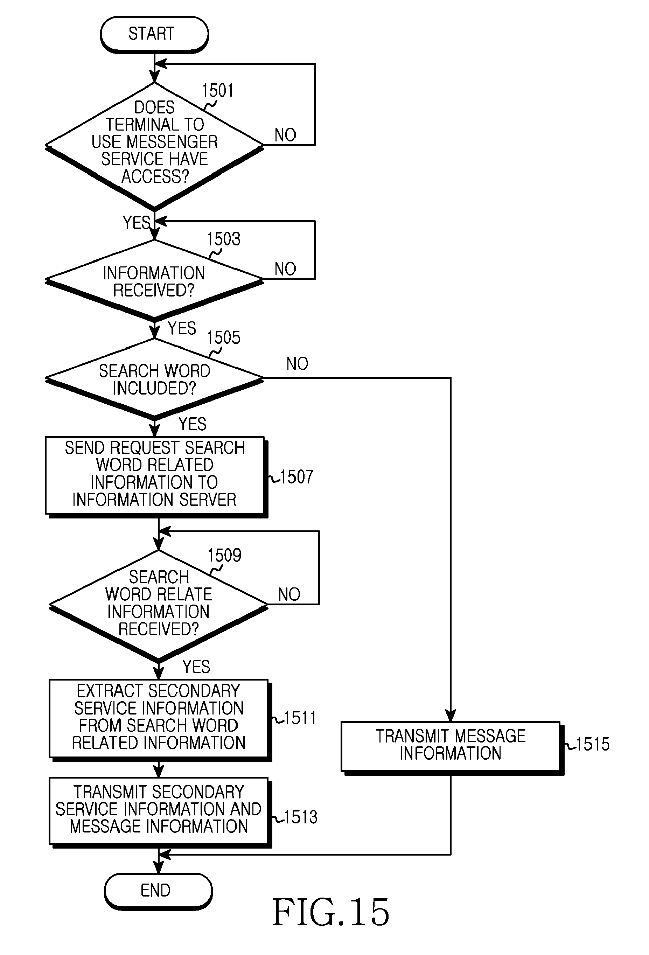

As described above, a terminal using a messenger service displays secondary service information received from a messenger server, together with messenger message content. At this time, the messenger server extracts and transmits the secondary service information as illustrated in FIG. 15 and described below.

FIG. 15 illustrates a procedure for providing secondary service information about a messenger service in a messenger server according to the first exemplary embodiment of the present invention.

Referring to FIG. 15, in step 1501, the messenger server identifies if at least one terminal to use a messenger service has access to the messenger server. If the messenger server does not identify in step 1501 if at least one terminal to use a messenger service has access to the messenger server, the method loops back to step 1501 repeatedly to have the messenger server identify if at least one terminal to use a messenger service has access to the messenger server.

However, if it is identified in step 1501 that the at least one terminal to use the messenger service has access to the messenger server, the messenger server proceeds to step 1503 and identifies if information for the messenger service is received from the accessed terminal. Here, the information for the messenger service includes messenger message content and information of a called terminal to receive the messenger message content.

If it is not identified in step 1503 that the information for the messenger service is received from the accessed terminal, the method loops back to step 1503 repeatedly to identify that the information for the messenger service is received from the accessed terminal. However, if it is identified in step 1503 that the information for the messenger service is received from the accessed terminal, the messenger server proceeds to step 1505 and identifies if a search word for a secondary service is included in the messenger message content received from the accessed terminal.

If it is identified in step 1505 that the search word for the secondary service is not included in the messenger message content received from the accessed terminal, the messenger server proceeds to step 1515 and transmits the information for the messenger service, received from the accessed terminal, to the called terminal for the messenger service. For example, the messenger server identifies the information of the called terminal to receive the messenger message content, in the information for the messenger service received from the terminal having had access to itself. Next, the messenger server transmits the messenger message content to the called terminal, and the method in FIG. 15 ends.

Referring back to step 1505, if it is identified in step 1505 that the search word for the secondary service is included in the messenger message content received from the accessed terminal, the messenger server proceeds to step 1507 and sends a request for information, related to the search word for the secondary service, to an information server. For example, as illustrated in FIG. 13, when the terminals 1300, 1302, and 1304 determine a place selling red-beam sherbet through the messenger service, the messenger server 1306 extracts search words "red-bean sherbet" and "place" among messenger message content. Next, the messenger server 1306 transmits extracted search word information to the information server 1308.

After step 1507, the messenger server proceeds to step 1509 and identifies if the search word related information is received from the information server. For instance, if sending a request for information about the search words "red-bean sherbet" and "place" to the information server, the messenger server identifies if the place selling red-bean sherbet and coupon information of each store are received from the information server. If it is not identified in step 1509 that the search word related information is received from the information server, the method loops back to step 1509 repeatedly to identify that the search word related information is received from the information server.

However, if it is identified in step 1509 that the search word related information is received from the information server, the messenger server proceeds to step 1511 and extracts secondary service information from the received search word related information. For instance, the messenger server extracts the secondary service information from the search word related information received from the information server using location information of terminals providing the secondary service or an appointment place thereof.

After step 1511, the messenger server proceeds to step 1513 and transmits the generated secondary service information and the messenger message content, received from the accessed terminal, to the terminals for the messenger service. For instance, the messenger server identifies the information of the called terminal to receive the messenger message content in the information for the messenger service received from the terminal having had access to itself. Next, the messenger server transmits the messenger message content to the called terminal. At this time, the messenger server additionally transmits the secondary service information to the terminal providing the secondary service.

After step 1513, the messenger server terminates the method of the present invention.

In the aforementioned exemplary embodiment, the messenger server extracts secondary service information from search word related information received from the information server, and transmits the extracted secondary service information to terminals providing a secondary service.

In another exemplary embodiment, the messenger server may recognize the search word related information received from the information server, as the secondary service information, and transmit the search word related information to the terminals providing the secondary service.

In the aforementioned exemplary embodiment, the messenger server searches messenger message contents of terminals, extracts secondary service information, and transmits the secondary service information to a terminal providing a secondary service.

In another exemplary embodiment, the messenger server may extract the secondary service information in response to search request information of a terminal, and transmit the extracted secondary service information to the terminal providing the secondary service as illustrated in FIG. 17 and described below.

FIG. 17 illustrates a procedure for providing secondary service information about a messenger service in a wireless communication system according to a second exemplary embodiment of the present invention.

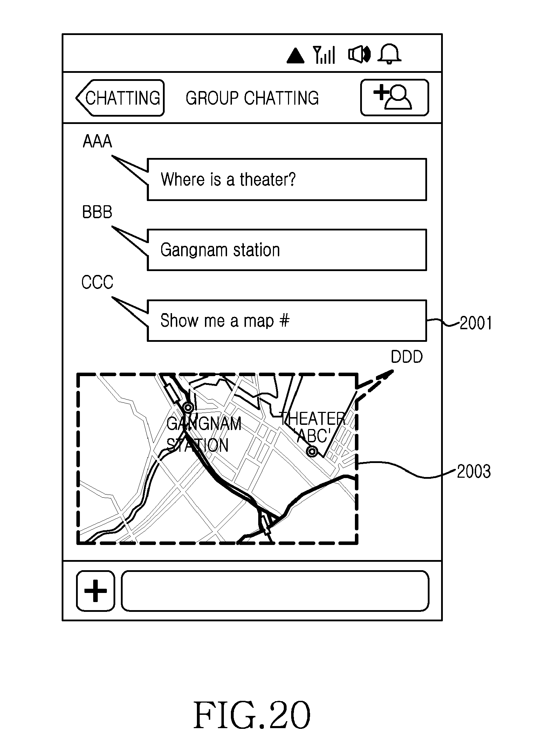

As illustrated in FIG. 17, when terminals 1700, 1702, and 1704 have access to a messenger server 1706 for a messenger service, the terminals 1700, 1702, and 1704 transmit messenger message contents, input by users, to the messenger server 1706. When the first terminal 1700 requires secondary service information, the first terminal 1700 transmits search request information to the messenger server 1706 in step 1711. For example, the first terminal 1700 transmits the search request information to the messenger server 1706 using an indicator, such as a predetermined character or symbol, such as "#" as illustrated in FIG. 20.

In response to the search request information of the first terminal 1700, the messenger server 1706 sends a request for information, related to a search word, to an information server 1708 in step 1713. For example, as illustrated in FIG. 20, while the terminals 1700, 1702, and 1704 determine Gangnam as an appointment place, if the first terminal 1700 transmits messenger message content "Please show me a map #", the messenger server 1706 extracts a search word "Gangnam" and a search word "map" indicated by the pound or number symbol # among the messenger message content. Next, the messenger server 1706 transmits extracted search word information to the information server 1708.

The information server 1708 extracts the information related to the search words that are received from the messenger server 1706, and transmits the extracted search word related information to the messenger server 1706 in step 1715. For example, the information server 1708 transmits map information of Gangnam to the messenger server 1706 depending on the search words received from the messenger server 1706.

The messenger server 1706 generates secondary service information to be transmitted to the terminals 1700, 1702, and 1704 that use a secondary service, from the search word related information received from the information server 1708 in step 1717. For example, the messenger server 1706 extracts a portion of a map of a Gangnam area received from the information server 1708, as the secondary service information, using the appointment place of the terminals 1700, 1702, and 1704 using the secondary service.

After that, the messenger server 1706 provides the secondary service information to the terminals 1700, 1702, and 1704 in step 1719 to step 1723. At this time, the messenger server 1706 may transmit messenger message contents to the terminals 1700, 1702 and 1704 providing the secondary service, together with the secondary service information.

In the aforementioned exemplary embodiment, the messenger server 1706 extracts secondary service information from search word related information received from the information server 1708, and transmits the extracted secondary service information to the terminals 1700, 1702, and 1704 providing the secondary service.

In another exemplary embodiment, the messenger server 1706 may recognize the search word related information received from the information server 1708, as the secondary service information, and transmit the secondary service information to the terminals 1700, 1702, and 1704 providing the secondary service.

Further, in the aforementioned exemplary embodiment, the messenger server 1706 and the information server 1708 are constructed separately from each other. In another exemplary embodiment, the messenger server 1706 and the information server 1708 may be constructed as one server.

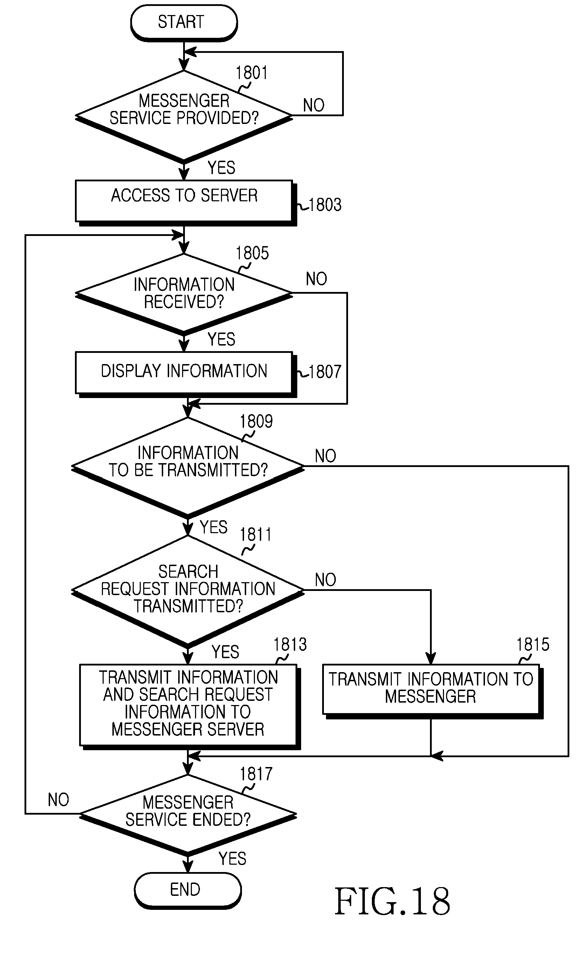

As described above, the messenger server generates secondary service information in response to search request information of the terminal providing the secondary service. At this time, the terminal providing the secondary service operates as illustrated in FIG. 18 and described below.

FIG. 18 illustrates a procedure for providing a messenger service in an electronic device according to a second exemplary embodiment of the present invention.

Referring to FIG. 18, in step 1801, a terminal identifies whether to provide a messenger service. For example, the terminal identifies if an application for providing the messenger service is selected by a user. If the terminal does not identify whether to provide a messenger service, the method loops back to step 1801 repeatedly to identify whether to provide a messenger service.

However, if the terminal is providing the messenger service in step 1801, the terminal proceeds to step 1803 and has access to a messenger server through a communication network to provide the messenger service to the user.

Next, the terminal proceeds to step 1805 and identifies if information is received from the messenger server. Here, the information received from the messenger server includes at least one of messenger message content and secondary service information related to the messenger message content.

If the terminal is not receiving the information from the messenger server in step 1805, the terminal jumps to step 1809 and identifies if information to be transmitted to the messenger server exists. For example, the terminal identifies if the user has made messenger message content for transmitting to a user of another terminal.

Referring back to step 1805, if the terminal is receiving the information from the messenger server in step 1805, the terminal proceeds to step 1807 and displays the information received from the messenger server such that the user can identify the information received from the messenger server. For example, when the first terminal 1700 provides a secondary service as illustrated in FIG. 17, the first terminal 1700 displays messenger message contents received from users of the other terminals 1702 and 1704 on the display unit 210 as illustrated in FIG. 20. If the first terminal 1700 receives secondary service information 2003 from the messenger server 1706, the first terminal 1700 displays the received secondary service information 2003 on the display unit 210 as shown in FIG. 20. At this time, the first terminal 1700 displays the secondary service information like messenger message content that itself has transmitted.

Referring back to step 1807 in FIG. 18, after step 1807, the terminal proceeds to step 1809 and identifies if information to be transmitted to the messenger server exists. For example, the terminal identifies if the user has made messenger message content for transmitting to a user of another terminal.

If it is identified in step 1809 that the information to be transmitted to the messenger server does not exist, the terminal jumps to step 1817 and identifies if the messenger service is ended. For example, the terminal identifies if the driving of the application for providing the messenger service is ended due to control by the user.

However, if it is identified in step 1809 that the information to be transmitted to the messenger server exists, the terminal proceeds to step 1811 and identifies whether to transmit search request information. For example, the terminal identifies if a search request indicator (e.g., a predetermined character or symbol such as "#", denoted by reference numeral 2001) is included in the messenger message content input by the user as illustrated in FIG. 20.

If the terminal is transmitting the search request information in step 1811, the terminal proceeds to step 1813 and transmits the messenger message content input by the user and the search request information, to the messenger server.

However, if the terminal not transmitting the search request information in step 1811, the terminal proceeds to step 1815 and transmits the messenger message content, input by the user, to the messenger server.

Referring back to step 1813, after step 1813, the terminal proceeds to step 1817 and identifies if the messenger service is ended. For example, the terminal identifies if the driving of the application for providing the messenger service is ended due to the control by the user.

If it is identified in step 1817 that the messenger service is not ended, the terminal returns to step 1805 and identifies if information is received from the messenger server.

However, if it is identified in step 1817 that the messenger service is ended, the terminal terminates the method of the present invention.

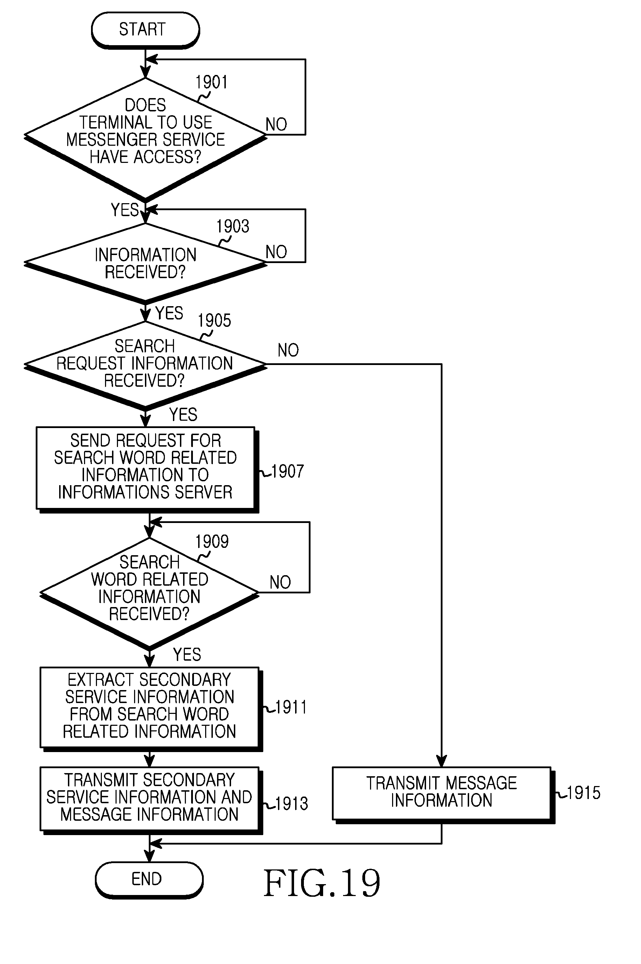

As described above, the terminal using the messenger service displays secondary service information received from the messenger server, together with messenger message content. At this time, the messenger server generates and transmits the secondary service information as illustrated in FIG. 19 and described below.

FIG. 19 illustrates a procedure for providing secondary service information about a messenger service in a messenger server according to the second exemplary embodiment of the present invention.

Referring to FIG. 19, in step 1901, the messenger server identifies if at least one terminal to use a messenger service has access to the messenger server. If the message server does not identify that at least one terminal to use a messenger service has access to the messenger server, the method loops back to step 1901 repeatedly to identify if at least one terminal to use a messenger service has access to the messenger server.

If it is identified in step 1901 that the at least one terminal to use the messenger service has access to the messenger server, the messenger server proceeds to step 1903 and identifies if information for the messenger service is received from the terminal having had access to itself. Here, the information for the messenger service includes messenger message content and information of a called terminal to receive the messenger message content. If it is identified in step 1903 that the information for the messenger service is not received from the accessed terminal, the method loops back to step 1903 repeatedly to identify that the information for the messenger service is received from the accessed terminal.

If it is identified in step 1903 that the information for the messenger service is received from the accessed terminal, the messenger server proceeds to step 1905 and identifies if search request information for a secondary service is included in the messenger message content received from the accessed terminal.

If it is identified in step 1905 that the search request information for the secondary service is not included in the messenger message content received from the accessed terminal, the messenger server proceeds to step 1915 and transmits the messenger message content, received from the accessed terminal, to the called terminal for the messenger service. For example, the messenger server identifies the information of the called terminal to receive the messenger message content, in the information for the messenger service received from the terminal having had access to itself. Next, the messenger server transmits the messenger message content to the called terminal. The method in FIG. 19 then ends.

Referring back to step 1905, if it is identified in step 1905 that the search request information for the secondary service is included in the messenger message content received from the accessed terminal, the messenger server proceeds to step 1907 and sends a request for information, related to a search word for the secondary service, to an information server. For example, as illustrated in FIG. 20, while terminals determine movie watching in Gangnam through the messenger service, if a first terminal makes a request 2001 for a map search, the messenger server extracts search words "Gangnam" and "map" that are search request information, among messenger message content. Next, the messenger server transmits extracted search word information to the information server.

After step 1907, the messenger server proceeds to step 1909 and identifies if the search word related information is received from the information server. For example, when the messenger server sending a request for information about the search words "Gangnam" and "map" to the information server, the messenger server identifies if a map of Gangnam is received from the information server. If it is not identified in step 1909 that the search word related information is received from the information server, the method loops back to step 1909 repeatedly to identify that the search word related information is received from the information server.

However, if it is identified in step 1909 that the search word related information is received from the information server, the messenger server proceeds to step 1911 and generates secondary service information from the search word related information received from the information server. For example, the messenger server extracts a portion of the map of Gangnam received from the information server, as the secondary service information, using an appointment place of terminals using the secondary service.

After step 1911, the messenger server proceeds to step 1913 and transmits the generated secondary service information and the messenger message content, received from the accessed terminal, to the terminals for the messenger service. For example, the messenger server identifies the information of the called terminal to receive the messenger message content, in the information for the messenger service received from the terminal having had access to itself. Next, the messenger server transmits the messenger message content to the called terminal. At this time, the messenger server additionally transmits the secondary service information to the terminal providing the secondary service.

After step 1913, the messenger server terminates the method of the present invention.

In the aforementioned exemplary embodiment, the messenger server extracts secondary service information from search word related information received from the information server, and transmits the extracted secondary service information to terminals providing a secondary service.

In another exemplary embodiment, the messenger server may recognize the search word related information, received from the information server, as the secondary service information, and transmit the search word related information to the terminals providing the secondary service.

As described above, the messenger server generates secondary service information using a search word included in messenger message content. At this time, the search word of the messenger server includes a time, a place name, a company name, a product name and the like, and can be set and changed by a service provider and a user.

In the aforementioned exemplary embodiment, if a terminal using a messenger service provides a secondary service, the terminal displays secondary service information received from the messenger server, together with messenger message content.

In another exemplary embodiment, the terminal may extract the secondary service information from its own schedule information depending on search word information included in messenger message content received from the messenger server, and display the extracted secondary service information on the display unit 210. For example, if providing the messenger service, the terminal has access to the messenger server. Next, when messenger message content is received from the messenger server, the terminal identifies if search words (e.g., "August 08" and "appointment") are included in the messenger message content. If the search words are identified, the terminal extracts schedule information, which is set on August 08, from its own schedule information, and displays the extracted schedule information on the display unit 210.

As described above, exemplary embodiments of the present invention have an advantage of being capable of increasing the convenience of messenger service use, by providing secondary service information related to message content transmitted/received through a messenger service in an electronic device.

The above-described apparatus and methods according to the present invention can be implemented in hardware or firmware, or as software or computer code, or combinations thereof. In addition, the software or computer code can also be stored in a non-transitory recording medium such as a CD ROM, a RAM, a ROM whether erasable or rewritable or not, a floppy disk, CDs, DVDs, memory chips, a hard disk, a magnetic storage media, an optical recording media, or a magneto-optical disk or computer code downloaded over a network originally stored on a remote recording medium, a computer readable recording medium, or a non-transitory machine readable medium and to be stored on a local recording medium, so that the methods described herein can be rendered in such software, computer code, software modules, software objects, instructions, applications, applets, apps, etc. that is stored on the recording medium using a general purpose computer, a digital computer, or a special processor or in programmable or dedicated hardware, such as an ASIC or FPGA. As would be understood in the art, the computer, the processor, microprocessor controller or the programmable hardware include volatile and/or non-volatile storage and memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, the program may be electronically transferred through any medium such as communication signals transmitted by wire/wireless connections, and their equivalents. The programs and computer readable recording medium can also be distributed in network-coupled computer systems so that the computer readable code is stored and executed in a distributed fashion.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for providing a messenger service in a first server of a wireless communication system, the method comprising:
detecting a search word from a message received from at least one electronic device;
determining supplementary information dependent on the search word detected from the message received from the at least one electronic device; and
transmitting the message and the supplementary information to at least one electronic device providing a supplementary service among the at least one electronic device.

2. The method of claim 1, wherein the search word comprises at least one of location information, time information, a company name, and a product name.

3. The method of claim 1, wherein determining the supplementary information comprises:
identifying schedule information about the at least one electronic device providing the supplementary service; and
extracting the supplementary information related to the search word from the identified schedule information.

4. The method of claim 3, wherein identifying the schedule information comprises identifying schedule information about each at least one electronic device, in a message received from the at least one electronic device providing the supplementary service.

5. The method of claim 1, wherein generating the supplementary information comprises:
transmitting the search word, which is extracted from the message, to a second server;
when receiving first information dependent on the search word from the second server, generating supplementary information using the first information and schedule information about at least one electronic device providing the supplementary service.

6. The method of claim 1, wherein detecting the search word comprises:
identifying if there is a message comprising a search request indicator among the message received from the at least one electronic device; and
detecting the search word from the message comprising the search request indicator.

7. A method for providing a messenger service in an electronic device, the method comprising:
accessing a messenger server;
sending a first message to the messenger server; and
when receiving a second message and supplementary information from the messenger server, displaying the second message and supplementary information such that the second message and supplementary information are distinguished from each other.

8. The method of claim 7, further comprising:
before sending the first message, transmitting schedule information stored in the electronic device to the messenger server.

9. The method of claim 7, wherein the sending of the first message comprises transmitting the schedule information stored in the electronic device and the first message to the messenger server.

10. The method of claim 7, wherein the sending of the first message comprises sending a first message comprising a search request indicator to the messenger server.

11. A server apparatus arranged to implement a method according to one of claims 1 to 6.

12. An electronic device arranged to implement a method according to one of claims 7 to 10.
